# EUROPÄISCHE PATENTSCHRIFT

(11) **EP 2 032 866 B1**
(45) Veröffentlichungstag und Bekanntmachung des Hinweises auf die Patenterteilung: **11.04.2018**
(21) Anmeldenummer: 07703563.2
(22) Anmeldetag: 27.02.2007
(51) Int. Cl.: F16C 13/02, F16C 35/02, B21B 31/07, F16C 21/00

(54) **LAGER FÜR WALZWERKSWALZEN**
BEARING FOR ROLLING-MILL ROLLS
PALIER POUR ROULEAUX DE LAMINOIR

(30) Priorität: 22.05.2006 DE 102006024136
(43) Veröffentlichungstag der Anmeldung: 11.03.2009
(73) Patentinhaber: SMS group GmbH, 40237 Düsseldorf (DE)
(72) Erfinder: KELLER, Karl, 57271 Hilchenbach (DE); ROEINGH, Konrad, 57271 Hilchenbach (DE); SCHEFFE, Kurt, 57271 Hilchenbach (DE)
(74) Vertreter: Klüppel, Walter
(86) Internationale Anmeldenummer: PCT/EP2007/001655
(87) Internationale Veröffentlichungsnummer: WO 2007/134655

(56) Entgegenhaltungen:
- WO-A-2007/121806
- DE-A1- 2 612 744
- FR-A- 2 676 943
- GB-A- 2 060 133
- GB-A- 2 079 895
- US-A- 2 245 084
- US-A- 4 372 626

## Beschreibung

Die Erfindung betrifft Lager für Walzwerkswalzen, die jeweils zwei Walzenzapfen aufweisen, von denen mindestens einer in axialer Richtung zumindest bereichsweise eine über eine Passfeder verdrehsicher angeordnete Zapfenbuchse trägt, wobei die Zapfenbuchse von einer in einem Einbaustück gehaltenen Lagerbuchse umgeben ist und zwischen der Zapfenbuchse und der Lagerbuchse ein tragfähiger Schmierfilm vorgesehen ist, wobei die Passfeder in einem Bereich des Walzenzapfens vorgesehen ist, der außerhalb des Bereichs der auf die Zapfenbuchse einwirkenden und auf das Einbaustück übertragenen Walzdruckkraft liegt, und die Ausdehnung der Passfeder in radialer Richtung größer ist als deren Ausdehnung in axialer Richtung.

Gleitlager für Walzwerkswalzen sind seit langem bekannt. Diese trugen zwischen der Zapfenbuchse und dem Walzenzapfen Passfedern, die jedoch zu Walzdruckkraft-Schwankungen während des Walzvorgangs führten. Diese Walzen konnten, dadurch dass die Passfedern im Bereich der kraftaufnehmenden Zapfenbuchse angeordnet waren, kurz bauen. Dadurch waren die Walzgerüste schmal. Die Fundamente für die Walzgerüste, die Walzwerkshallen sowie die Walzenwerkstätten konnten klein gebaut werden.

Um jedoch die Walzdruckkraft-Schwankungen auszuschalten schlägt die DE 26 12 744 A1 vor, die Passfedern außerhalb des Bereichs der auf die Zapfenbuchse einwirkenden Walzdruckkraft zu legen. Dadurch wurden die Walzen länger. Damit einher gingen breitere Fundamente, breitere Walzwerkshallen und breitere Walzenwerkstätten.

Die gattungsbildende GB 2 079 895 A offenbart im Kopfbereich der Walzenzapfen angeordnete Passfedern. Durch die Anordnung mehrerer derartiger Passfedern können diese in axialer Richtung kleiner bauen. Der Erfindung liegt die Aufgabe zugrunde, Lager für Walzwerkswalzen zu schaffen, bei denen die durch die Passfeder bzw. deren Aufnahme-Nut bedingten Walzdruckkraft-Schwankungen ausgeschlossen sind und die dennoch sehr kurz bauen, so dass sich durch schmalere Fundamente und schmalere Walzwerkshallten sowie schmalere Walzwerkstätten erhebliche Einsparungen ergeben.

Zur Lösung der Aufgabe wird vorgeschlagen, dass der Walzenzapfen mit einer umlaufenden Stufe in einen abgesetzten Bereich übergeht, dass von der Stufe bis zur Außenkante der Lagerbuchse eine Rötscher-Linie als Kraftübertragungslinie verläuft, und dass die Passfeder bzw. deren Aufnahme-Nut möglichst nahe an der den Außenbereich der Druckkraftübertragung begrenzenden Rötscher-Linie angeordnet ist. Durch das Anordnen der Passfeder bzw. deren Aufnahme-Nut möglichst nahe an die Rötscher-Linie, ergibt sich eine möglichst kurze Bauform der Walzen. Werden zusätzlich noch die Passfedern so eingebaut, dass sie sich im Wesentlichen in radialer Richtung erstrecken wird weiterer Platz gewonnen. Da dieser Gewinn auf beiden Seiten der Walze erfolgt, ergeben sich schmalere Walzgerüste, schmalere Fundamente, schmalere Walzwerkshallen und schmalere Walzenwerkstätten bei gleich guter Walzqualität.

Von Vorteil ist, wenn die Passfeder bzw. deren Aufnahme-Nut direkt an die Rötscher- Linie angrenzt. Damit ist der kleinstmögliche Abstand und damit die kürzeste Walzenbauart bei hoher Walzqualität ohne Walzdruckkraft-Schwankungen gewährleistet.

Die Erfindung wird anhand einer Zeichnung näher erläutert. Diese zeigt eine Walze 1 mit einem Walzenzapfen 2, der hier einen konischen Bereich 3 aufweist. Anstelle des konischen Bereichs 3 ist selbstverständlich ein zylindrischer Bereich denkbar.

Auf dem Walzenzapfen 2 sitzt die Zapfenbuchse 4. Sie ist über eine Passfeder 5, welche in den Walzenzapfen 2 und in die Zapfenbuchse 4 eingreift gegen Verdrehen gegenüber dem Walzenzapfen 2 gesichert. Die Zapfenbuchse 4 ist von einer Lagerbuchse 6 umgeben, welche in einem Einbaustück 7 gehalten ist.

An einer Stufe 8 geht der konische Walzenzapfen 2 in einen abgesetzten Bereich über. Die Zapfenbuchse 4 wird hier nicht mehr vom Walzenzapfen getragen. Von der Stufe 8 bis zur Außenkante 9 der Lagerbuchse 6 verläuft die hier eingezeichnete, als äußerste Kraftübertragungslinie zu verstehende Rötscher-Linie 10. Dabei ist deutlich zu erkennen, dass der Kraftfluss, durch die Passfeder 5 nicht behindert bzw. unterbrochen, vom Walzenzapfen 2 über die Zapfenbuchse 4 zur Lagerbuchse 6 und von dort in das Einbaustück 7 fließen kann.

Die Passfeder 5 bzw. deren Aufnahme-Nut 11 berührt lediglich die Rötscher-Linie, sodass keine Walzdruckkraftschwankungen entstehen können. Damit ist die Passfeder 5 so nahe am Walzenzapfen 2 angeordnet, dass gerade keine Walzdruckkraft-Schwankungen entstehen können.

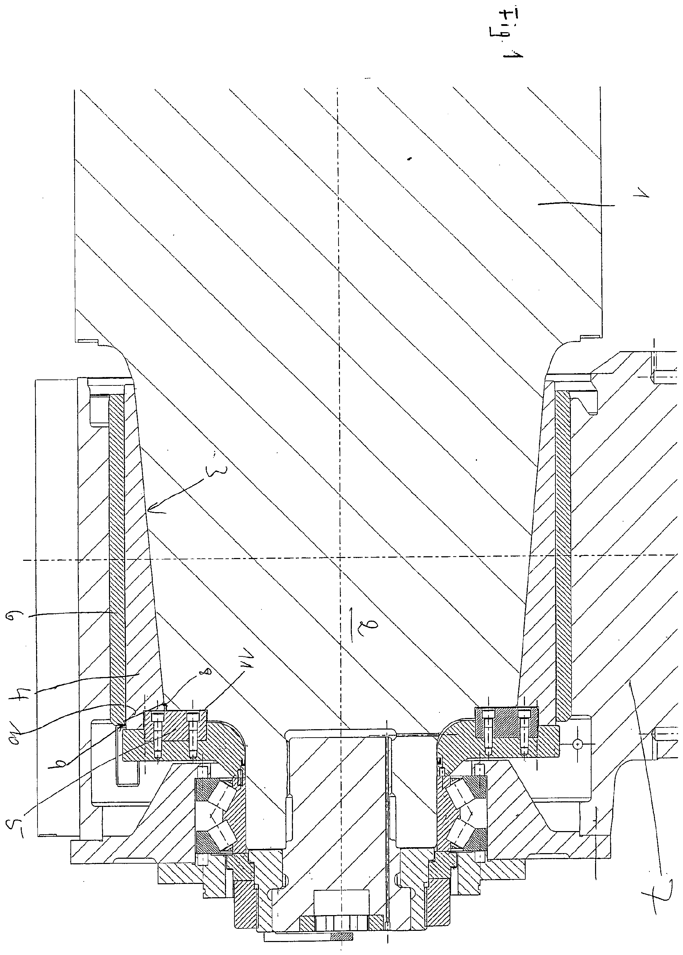

Weiterhin ist der Figur zu entnehmen, dass die Passfeder 5 sich im Wesentlichen in radialer Richtung erstreckt. Dadurch wird die axiale Abmessung der vorgelagerten Passfeder 5 möglichst klein, so dass der Walzenzapfen 2 insgesamt sehr kurz baut.

### Bezugszeichenliste

- 1: Walze
- 2: Walzenzapfen
- 3: konischer Bereich
- 4: Zapfenbuchse
- 5: Passfeder
- 6: Lagerbuchse
- 7: Einbaustück
- 8: Stufe
- 9: Außenkante
- 10: Rötscher-Linie
- 11: Aufnahme-Nut

## Patentansprüche

1. Lager für Walzwerkswalzen, die jeweils zwei Walzenzapfen (2) aufweisen, von denen mindestens einer in axialer Richtung zumindest bereichsweise eine über eine Passfeder (5) verdrehsicher angeordnete Zapfenbuchse (4) trägt, wobei die Zapfenbuchse (4) von einer in einem Einbaustück (7) gehaltenen Lagerbuchse (6) umgeben ist und zwischen der Zapfenbuchse (4) und der Lagerbuchse (6) ein tragfähiger Schmierfilm vorgesehen ist, wobei die Passfeder (5) in einem Bereich des Walzenzapfens (2) vorgesehen ist, der außerhalb des Bereichs der auf die Zapfenbuchse (4) einwirkenden und auf das Einbaustück (7) übertragenen Walzdruckkraft liegt, und die Ausdehnung der Passfeder (5) in radialer Richtung größer ist als deren Ausdehnung in axialer Richtung. **dadurch gekennzeichnet,**
**dass** der Walzenzapfen (2) mit einer umlaufenden Stufe (8) in einen abgesetzten Bereich übergeht,
**dass** von der Stufe (8) bis zur Außenkante (9) der Lagerbuchse (6) eine Rötscher-Linie (10) als Kraftübertragungslinie verläuft, und
**dass** die Passfeder (5) bzw. deren Aufnahme-Nut (11) möglichst nahe der den Außenbereich der Druckkraftübertragung begrenzenden Rötscher-Linie (10) angeordnet ist.

2. Lager nach Anspruch 1,
**dadurch gekennzeichnet,**
**dass** die Passfeder (4) bzw. deren Aufnahme-Nut (11) direkt an die Rötscher-Linie (10) angrenzt.

## Claims

1. Bearing for rolling mill rolls each having two roll pins (2), of which at least one carries in axial direction and at least regionally a pin bush (4) arranged to be secure by a key (5) against relative rotation, wherein the pin bush (4) is surrounded by a bearing bush (6) held in a chock (7) and a load-bearing lubricating film is provided between the pin bush (4) and the bearing bush (6), wherein the key (5) is provided in a region of the roll pin (2) lying outside the region of the roll pressing force acting on the pin bush (4) and transmitted to the chock (7), and the length of the key (5) in radial direction is greater than the length thereof in axial direction, **characterised in that** the roll pin (2) goes over by an encircling step (8) into a reduced region, that a Rötscher line (10) extends as force transmission line from the step (8) to the outer edge (9) of the bearing bush (6) and the key (5) or the receiving groove (11) thereof is arranged as close as possible to the Rötscher line (10) bounding the outer region of the pressure force transmission.

2. Bearing according to claim 1, **characterised in that** the key (4) or the receiving groove (11) thereof directly adjoins the Rötscher line (10).

## Revendications

1. Palier pour des cylindres de laminoir qui présentent respectivement deux tourillons (2), dont au moins un porte en direction axiale, au moins par zones, une douille de tourillon (4) solidaire en rotation via une clavette (5) ; dans lequel la douille de tourillon (4) est entourée par une douille de palier (6) maintenue dans une empoise (7) et un film de lubrification résistant est prévu entre la douille de tourillon (4) et la douille de palier (6) ; dans lequel la clavette (5) est prévue dans une zone du tourillon de cylindre (2) qui est située à l'extérieur de la zone de la force de pression de cylindre s'exerçant sur la douille de tourillon (4) et transmise à l'empoise (7), et la dimension de la clavette (5) en direction axiale est supérieure à sa dimension en direction axiale, **caractérisé en ce que** le tourillon de cylindre (2) se transforme, avec un gradin périphérique (8), en une zone étagée ; **en ce que**, entre le gradin (8) et l'arête externe (9) de la douille de palier (6), s'étend une ligne de Rötscher (10) sous la forme d'une ligne de transmission de force ; et **en ce que** la clavette (5), respectivement sa rainure de réception (11) est disposée le plus près possible de la ligne de Rötscher (10) délimitant la zone externe de la transmission de force de pression.

2. Palier selon la revendication 1, **caractérisé en ce que** la clavette (4) respectivement sa rainure de réception (11) est directement adjacente à la ligne de Rötscher (10).
